# EUROPÄISCHE PATENTSCHRIFT

(11) **EP 4 337 573 B1**
(45) Veröffentlichungstag und Bekanntmachung des Hinweises auf die Patenterteilung: **22.07.2026**
(21) Anmeldenummer: 22725261.6
(22) Anmeldetag: 26.04.2022
(51) Int. Cl.: B65G 1/04, H02J 7/34, B65G 1/06, H02J 7/50

(54) **VERFAHREN ZUM BETREIBEN EINES LAGERSYSTEMS UND LAGERSYSTEM**
METHOD FOR CONTROLLING A STORAGE SYSTEM AND STORAGE SYSTEM
METHODE DE CONTROLE D'UN SYSTEME DE STOCKAGE ET SYSTEME DE STOCKAGE

(30) Priorität: 12.05.2021 DE 102021002505
(43) Veröffentlichungstag der Anmeldung: 20.03.2024
(73) Patentinhaber: SEW-EURODRIVE GmbH & Co. KG, 76646 Bruchsal (DE)
(72) Erfinder: BRECHT, Roland, 76307 Karlsbad (DE)
(86) Internationale Anmeldenummer: PCT/EP2022/061059
(87) Internationale Veröffentlichungsnummer: WO 2022/238112

(56) Entgegenhaltungen:
- EP-A1- 3 543 200
- WO-A2-2016/094923
- AT-A1- 502 079
- DE-A1- 102014 220 165

## Beschreibung

Die Erfindung betrifft ein Verfahren zum Betreiben eines Lagersystems, das eine Mehrzahl von Regalgassen, welche jeweils ein Lagerregal und ein Fahrzeug, welches entlang des Lagerregals in einer Längsrichtung bewegbar ist, umfassen, wobei die Fahrzeuge jeweils eine Hubvorrichtung aufweisen, welche jeweils eine Aufnahmevorrichtung umfasst, die in eine Vertikalrichtung bewegbar ist. Die Erfindung betrifft auch ein Lagersystem, das mit dem erfindungsgemäßen Verfahren betreibbar ist.

Lagersysteme dienen in technischen Anlagen, beispielsweise in Produktionswerken, dazu, Ausgangsmaterialien sowie gefertigte Produkte zu lagern, bis diese einer weiteren Verwendung, beispielsweise Verarbeitung oder Versand, zugeführt werden. Zum einfachen Transport der besagten Ausgangsmaterialien und Produkte werden diese beispielsweise in oder auf Ladungsträgern abgelegt. Bei den Ladungsträgern handelt es sich beispielsweise um Kisten, Boxen oder Paletten.

Ein gattungsgemäßes Lagersystem umfasst eine Mehrzahl von Lagerregalen, welche jeweils eine Mehrzahl von Ebenen aufweist, welche in einer Vertikalrichtung versetzt zueinander, also übereinander, angeordnet sind. Jede Ebene weist dabei eine Mehrzahl von Lagerfächern zur Aufnahme von Ladungsträgern auf, wobei die Lagerfächer einer Ebene nebeneinander angeordnet sind. Diese Anordnung mit mehreren übereinander angeordneten Ebenen gestattet die Aufnahme einer Vielzahl von Ladungsträgern auf einer verhältnismäßig geringen Grundfläche.

Zum Einlagern von Ladegut aus den Lagerfächern sowie zum Auslagern von Ladegut aus den Lagerfächern sind Regalbediengeräte bekannt. Ein Regalbediengerät ist ein Fahrzeug, welches in einer Regalgasse entlang eines Lagerregals in einer Längsrichtung bewegbar ist. Ein Regalbediengerät weist dabei eine Hubvorrichtung auf, welche jeweils eine Aufnahmevorrichtung zur Aufnahme des Ladeguts umfasst, die in eine Vertikalrichtung bewegbar ist.

Zum Beschleunigen des Fahrzeugs in Längsrichtung wird elektrische Energie benötigt, beim Abbremsen des Fahrzeugs in Längsrichtung wird elektrische Energie erzeugt. Zum Anheben eines Ladeguts in Vertikalrichtung wird elektrische Energie benötigt, beim Absenken des Ladeguts in Vertikalrichtung wird elektrische Energie erzeugt.

Aus der DE 10 2010 020 124 B4 ist ein elektrisch betreibbares Regalbediengerät bekannt. Das Regalbediengerät ist auf einem Boden bewegbar und dient dazu, Massen in Vertikalrichtung zu heben und zu bewegen. DE 10 2010 020 124 B4 offenbart ein Verfahren gemäß dem Oberbegriff des Anspruchs 1 und ein Lagersystem gemäß dem Oberbegriff des Anspruchs 9.

Aus der DE 10 2016 003 665 A1 sind ein Lagersystem und ein Verfahren zum Betreiben eines Lagersystems bekannt. Das Lagersystem weist mehrere Gassen auf, in welchen ein Fahrzeug bewegbar ist.

Aus der AT 516 633 A1 und aus der WO 2016/094923 A2 ist eine Lageranordnung mit mehreren Lagerplätzen für Stückgüter bekannt. Es sind mehrere automatisierte Regalbediengeräte zum Einlagern und Auslagern der Stückgüter vorgesehen.

Aus der AT 502 079 A1 ist ein Regallagersystem mit mehreren Regaleinheiten bekannt. Dabei weist jede Regaleinheit ein eigenes verfahrbares Regalbediengerät mit elektrischen Antriebsmotoren auf.

Aus der DE 10 2009 024 357 A1 ist eine Industrieanlage mit einem Regallager bekannt. In das Regallager sind Waren ein- und auslagerbar. Das Regallager weist mehrere elektrisch betriebene Regalbediengeräte auf.

Aus der WO 2008/031608 A1 ist ein Warenlager bekannt, in welchem ein Regalbediengerät für den Transport der Waren sorgt. Das Regalbediengerät läuft dabei auf Schienen und besitzt ein Fahrwerk mit einem Antriebsmotor.

Aus der EP 3 543 200 A1 ist ein Verfahren zur Steuerung eines Regalbediengeräts bekannt.

Dabei wird elektrische Energie in einem Superkondensator zwischengespeichert. Elektrische Betriebsparameter des Regalbediengeräts werden überwacht und abhängig von den elektrischen Betriebsparametern wird die Einspeisung und/oder die Entnahme von elektrischer Energie gesteuert.

Aus der DE 10 2014 220 165 A1 sind ein Regalbediengerät und ein Verfahren zum Steuern eines Regalbediengeräts bekannt. Das Regalbediengerät weist einen Zwischenkreis mit einem Superkondensator auf.

Der Erfindung liegt die Aufgabe zugrunde, ein Verfahren zum Betreiben eines Lagersystems sowie ein Lagersystem weiterzubilden.

Die Aufgabe wird erfindungsgemäß durch ein Verfahren zum Betreiben eines Lagersystems mit den in Anspruch 1 angegebenen Merkmalen gelöst. Vorteilhafte Ausgestaltungen und Weiterbildungen sind Gegenstand der Unteransprüche. Die Aufgabe wird auch durch ein Lagersystem mit den in Anspruch 9 angegebenen Merkmalen gelöst. Vorteilhafte Ausgestaltungen und Weiterbildungen sind Gegenstand der Unteransprüche.

Es wird ein Verfahren zum Betreiben eines Lagersystems vorgeschlagen. Das Lagersystem umfasst eine Mehrzahl von Regalgassen, welche jeweils ein Lagerregal und ein Fahrzeug, welches entlang des Lagerregals in einer Längsrichtung bewegbar ist, umfassen. Die Fahrzeuge weisen jeweils eine Hubvorrichtung auf, welche jeweils eine Aufnahmevorrichtung zur Aufnahme eines Ladeguts umfasst. Die Aufnahmevorrichtung ist beispielsweise in Form einer Plattform ausgebildet und ist in eine Vertikalrichtung bewegbar. Elektrische Energie, die im Betrieb von einem der Fahrzeuge in einer der Regalgassen erzeugt wird, wird einer anderen Regalgasse zugeleitet.

Das erfindungsgemäße Verfahren gestattet, kinematische und potentielle Energie, die im Betrieb eines Fahrzeugs kurzfristig frei wird, in elektrische Energie zu wandeln und zu speichern. Die so gespeicherte Energie ist später abrufbar. Somit wird der Energiebedarf des Lagersystems vorteilhaft reduziert. Ferner wird ein Spitzenleistungsbedarf des Lagersystems minimiert und damit ist die erforderliche Anschlussleistung vorteilhaft verringert. Erfahrungsgemäß sind in einem Lagersystem nicht, oder nur sehr selten, alle Fahrzeuge gleichzeitig in Betrieb. Das erfindungsgemäße Verfahren ermöglicht hier insbesondere, die erzeugte elektrische Energie einer Regalgasse zuzuleiten, deren Fahrzeug gerade nicht in Betrieb ist. Die einer anderen Regalgasse zugeleitete elektrische Energie ist in der besagten anderen Regalgasse beispielsweise in einem elektrischen Energiespeicher speicherbar oder in potentielle Energie wandelbar.

Erfindungsgemäß weist jede der Regalgassen jeweils einen Zwischenkreiskondensator auf. Elektrische Energie, die im Betrieb von einem der Fahrzeuge in einer der Regalgassen erzeugt wird, wird dabei in dem Zwischenkreiskondensator einer anderen Regalgasse gespeichert. Durch die Aufteilung der elektrischen Energie auf mehrere Zwischenkreiskondensatoren ist die erforderliche Kapazität der Zwischenkreiskondensatoren in den einzelnen Regalgassen reduziert.

Vorzugsweise sind die Zwischenkreiskondensatoren der Regalgassen dabei elektrisch miteinander verbunden. Die Zwischenkreiskondensatoren der Regalgassen bilden also eine Parallelschaltung.

Gemäß einer vorteilhaften Ausgestaltung der Erfindung weist jede der Regalgassen jeweils eine aufladbare Batterie auf. Elektrische Energie, die im Betrieb von einem der Fahrzeuge in einer der Regalgassen erzeugt wird, wird dabei in der Batterie einer anderen Regalgasse gespeichert. Durch die Aufteilung der elektrischen Energie auf mehrere Batterien ist die erforderliche Kapazität der Batterien in den einzelnen Regalgassen reduziert.

Vorzugsweise sind die Batterien der Regalgassen dabei elektrisch miteinander verbunden. Die Batterien der Regalgassen bilden also eine Parallelschaltung.

Gemäß einer weiteren vorteilhaften Ausgestaltung der Erfindung wird elektrische Energie, die im Betrieb von einem der Fahrzeuge in einer der Regalgassen erzeugt wird, zum Antrieb eines Fahrzeugs in einer anderen Regalgasse in die Längsrichtung verwendet. Eine Zwischenspeicherung der Energie ist somit nicht erforderlich. Die in der einen Regalgasse erzeugte elektrische Energie wird in der anderen Regalgasse in kinetische Energie gewandelt.

Gemäß einer weiteren vorteilhaften Ausgestaltung der Erfindung wird elektrische Energie, die im Betrieb von einem der Fahrzeuge in einer der Regalgassen erzeugt wird, zum Antrieb der Aufnahmevorrichtung der Hubvorrichtung eines Fahrzeugs in einer anderen Regalgasse in die Vertikalrichtung verwendet wird. Eine Zwischenspeicherung der Energie ist somit nicht erforderlich. Die in der einen Regalgasse erzeugte elektrische Energie wird in der anderen Regalgasse in potentielle Energie gewandelt.

Gemäß einer weiteren vorteilhaften Weiterbildung der Erfindung wird elektrische Energie, die im Betrieb von einem der Fahrzeuge in einer der Regalgassen erzeugt wird, in einer anderen Regalgasse verwendet, um ein Ladegut von einem unteren Lagerfach in ein oberes Lagerfach zu bewegen. Dabei ist das obere Lagerfach in Vertikalrichtung von einem Boden weiter entfernt als das untere Lagerfach. Die in der einen Regalgasse erzeugte elektrische Energie wird in der anderen Regalgasse in potentielle Energie gewandelt, indem das Ladegut nach oben bewegt wird.

Gemäß einer weiteren vorteilhaften Weiterbildung der Erfindung wird elektrische Energie, die zum Betrieb von einem der Fahrzeuge in einer der Regalgassen benötigt wird, in einer anderen Regalgasse erzeugt, indem in der anderen Regalgasse ein Ladegut von einem oberen Lagerfach in ein unteres Lagerfach bewegt wird. Dabei ist das obere Lagerfach in Vertikalrichtung von einem Boden weiter entfernt als das untere Lagerfach. Die in der einen Regalgasse benötigte elektrische Energie wird in der anderen Regalgasse durch Umwandlung von potentielle Energie erzeugt, indem das Ladegut nach unten bewegt wird.

Ein erfindungsgemäßes Lagersystem umfasst eine Mehrzahl von Regalgassen, welche jeweils ein Lagerregal und ein Fahrzeug, welches entlang des Lagerregals in einer Längsrichtung bewegbar ist, umfassen. Die Fahrzeuge weisen jeweils eine Hubvorrichtung auf, welche jeweils eine Aufnahmevorrichtung zur Aufnahme eines Ladeguts umfasst. Die Aufnahmevorrichtung ist beispielsweise in Form einer Plattform ausgebildet und ist in eine Vertikalrichtung bewegbar. Jede der Regalgassen jeweils einen Zwischenkreiskondensator aufweist. Die elektrische Energie, die im Betrieb von einem der Fahrzeuge in einer der Regalgassen erzeugt wird, in dem Zwischenkreiskondensator einer anderen Regalgasse gespeichert wird.

Das erfindungsgemäße Lagersystem ist dabei mit dem erfindungsgemäßen Verfahren betreibbar.

In dem erfindungsgemäßen Lagersystem ist kinematische sowie potentielle Energie, die im Betrieb eines Fahrzeugs kurzfristig frei wird, in elektrische Energie wandelbar und speicherbar. Die so gespeicherte Energie ist später abrufbar. Somit wird der Energiebedarf des Lagersystems vorteilhaft reduziert. Ferner wird ein Spitzenleistungsbedarf des Lagersystems minimiert und damit ist die erforderliche Anschlussleistung vorteilhaft verringert. Die einer anderen Regalgasse zugeleitete elektrische Energie ist in der besagten anderen Regalgasse beispielsweise in einem elektrischen Energiespeicher speicherbar oder in potentielle Energie wandelbar.

Gemäß einer weiteren vorteilhaften Ausgestaltung der Erfindung umfasst das Lagersystem ein Auftragssystem zur Übermittlung von Logistikaufträgen an eine Steuereinheit und eine Steuereinheit zur Koordinierung von erhaltenen Logistikaufträgen und zur Übermittlung von Einzelaufträgen an die einzelnen Regalgassen.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Darstellung einer Regalgasse und
- Figur 2:: eine schematische Darstellung eines Lagersystems.

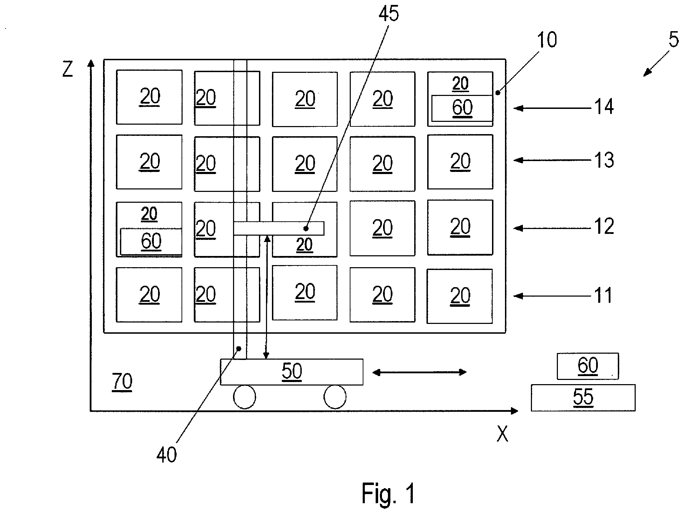

Figur 1 zeigt eine schematische Darstellung einer Regalgasse 5. Die Regalgasse 5 umfasst ein Lagerregal 10 und ein Fahrzeug 50. Das Lagerregal 10 steht auf einem Boden 70. Die Regalgasse 5 ist Teil eines Lagersystems 2. Das Lagersystem 2 umfasst eine Mehrzahl von Regalgassen 5, welche zumindest annähernd identisch zu der hier gezeigten Regalgasse 5 ausgebildet sind.

Das Fahrzeug 50 ist als Regalbediengerät ausgebildet. Das Fahrzeug 50 ist in der Regalgasse 5 entlang des Lagerregals 10 in einer Längsrichtung X bewegbar. Das Fahrzeug 50 weist eine Hubvorrichtung 40 auf, welche eine Aufnahmevorrichtung 45 zur Aufnahme eines Ladeguts 60 umfasst. Die Aufnahmevorrichtung ist in Form einer Plattform ausgebildet und ist in eine Vertikalrichtung Z bewegbar. Bei dem Ladegut 60 handelt es sich beispielsweise um Kisten, Boxen oder Paletten, die mit Produkten gefüllt sind.

Die Vertikalrichtung Z erstreckt sich senkrecht zu dem Boden 70, auf welchem das Lagerregal 10 steht. Die Längsrichtung X erstreckt sich rechtwinklig zu der Vertikalrichtung Z und parallel zu dem Boden 70. Eine Querrichtung erstreckt sich rechtwinklig zu der Vertikalrichtung Z und rechtwinklig zu der Längsrichtung X.

Das Lagerregal 10 umfasst eine Mehrzahl von Ebenen 11, 12, 13, 14, vorliegend eine erste Ebene 11, eine zweite Ebene 12, eine dritte Ebene 13 und eine vierte Ebene 14. Die Ebenen 11, 12, 13, 14 sind in der Vertikalrichtung Z versetzt zueinander, also übereinander, angeordnet. Die erste Ebene 11 ist dabei unten, also den Boden 70 zugewandt, angeordnet. Die vierte Ebene 14 ist oben, also den Boden 70 abgewandt, angeordnet.

Jede der Ebenen 11, 12, 13, 14 weist eine Mehrzahl von Lagerfächern 20 zur Aufnahme von Ladegut 60 auf. Die Lagerfächer 20 einer Ebene 11, 12, 13, 14 sind in der Längsrichtung X nebeneinander angeordnet. Durch eine Bewegung des Fahrzeugs 50 in die Längsrichtung X kombiniert mit einer Bewegung der Aufnahmevorrichtung 45 in die Vertikalrichtung Z ist jedes der Lagerfächer 20 zum Einlagern sowie zum Auslagern von Ladegut 60 erreichbar.

Die Regalgasse 5 umfasst auch eine Übergabestation 55. Die Übergabestation 55 befindet sich dabei unterhalb der Ebenen 11, 12, 13, 14 des Lagerregals 10. Die Übergabestation 55 ist in Vertikalrichtung Z also von dem Boden weiter entfernt als die Lagerfächer 20 in den Ebenen 11, 12, 13, 14 des Lagerregals 10.

Zum Einlagern wird ein Ladegut 60 auf der Übergabestation 55 bereitgestellt und von dort auf die Aufnahmevorrichtung 45 des Fahrzeugs 50 bewegt. Anschließend wir das auf der Aufnahmevorrichtung 45 befindliche Ladegut 60 zum einem Lagerfach 20 bewegt und in das Lagerfach 20 eingebracht.

Zum Auslagern wird ein Ladegut 60 aus einem Lagerfach 20 heraus auf die Aufnahmevorrichtung 45 des Fahrzeugs 50 bewegt. Anschließend wir das auf der Aufnahmevorrichtung 45 befindliche Ladegut 60 zu der Übergabestation 55 bewegt und auf der Übergabestation 55 bereitgestellt.

Das Fahrzeug 50 weist einen elektrischen Antrieb zur Bewegung in die Längsrichtung X auf. Zum Beschleunigen des Fahrzeugs 50 in die Längsrichtung X wird elektrische Energie benötigt. Beim Abbremsen des Fahrzeugs 50 in die Längsrichtung X wird elektrische Energie generatorisch erzeugt.

Die Hubvorrichtung 40 des Fahrzeugs 50 weist einen elektrischen Antrieb zur Bewegung der Aufnahmevorrichtung 45 in die Vertikalrichtung Z auf. Zum Anheben der Aufnahmevorrichtung 45 in Vertikalrichtung Z wird elektrische Energie benötigt. Beim Absenken der Aufnahmevorrichtung 45 in Vertikalrichtung Z wird elektrische Energie generatorisch erzeugt.

Die Regalgasse 5 weist eine Einspeisung zum Zuführen von elektrischer Energie zu dem Fahrzeug 50, insbesondere auch zu der Hubvorrichtung 40, auf. Die Regalgasse 5 weist auch einen Zwischenkreiskondensator zum Speichern von elektrischer Energie auf. Optional weist die Regalgasse 5 ferner noch eine aufladbare Batterie zum Speichern von elektrischer Energie auf.

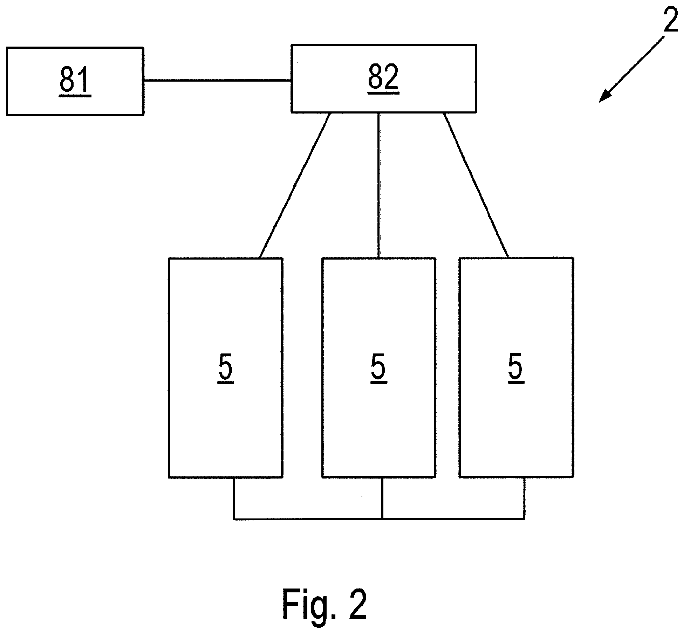

Figur 2 zeigt eine schematische Darstellung eines Lagersystems 2. Das Lagersystem 2 umfasst vorliegend drei Regalgassen 5, welche wie in Figur 1 dargestellt ausgebildet sind. Die besagten Regalgassen 5 weisen also jeweils eine Einspeisung zum Zuführen von elektrischer Energie, ein Zwischenkreiskondensator zum Speichern von elektrischer Energie, optional eine aufladbare Batterie zum Speichern von elektrischer Energie, sowie ein Lagerregal 10 und ein Fahrzeug 50 auf.

Die Zwischenkreiskondensatoren der einzelnen Regalgassen 5 sind elektrisch miteinander verbunden. Die Zwischenkreiskondensatoren der Regalgassen 5 bilden somit eine Parallelschaltung. Auch die, optional vorhandenen, Batterien der einzelnen Regalgassen 5 sind elektrisch miteinander verbunden. Die Batterien der Regalgassen 5 bilden somit ebenfalls eine Parallelschaltung.

Das Lagersystem 2 umfasst ein Auftragssystem 81 und eine Steuereinheit 82. Das Auftragssystem 81 übermittelt Logistikaufträge, insbesondere Aufträge zum Einlagern von Ladegut 60 sowie Aufträge zum Auslagern von Ladegut 60 zu der Steuereinheit 82. Die Steuereinheit 82 koordiniert die erhaltenen Logistikaufträge und übermittelt Einzelaufträge an die einzelnen Regalgassen 5.

Die Steuereinheit 82 koordiniert die erhaltenen Logistikaufträge insbesondere derart, dass elektrische Energie, die im Betrieb von einem der Fahrzeuge 50 in einer der Regalgassen 5 erzeugt wird, einer anderen Regalgasse 5 zugeleitet wird. Die Steuereinheit 82 koordiniert die erhaltenen Logistikaufträge auch derart, dass elektrische Energie, die im Betrieb von einem der Fahrzeuge 50 in einer der Regalgassen 5 benötigt wird, in einer anderen Regalgasse 5 erzeugt wird. Die Einzelaufträge werden somit kinematisch derart abgestimmt, dass erzeugte elektrische Energie weitgehend innerhalb des Lagersystems 2 bleibt.

Beispielsweise übermittelt das Auftragssystem 81 an die Steuereinheit 82 einen Logistikauftrag, ein Ladegut 60 auszulagern. Daraufhin übermittelt die Steuereinheit 82 an eine der Regalgassen 5 einen Einzelauftrag, das Ladegut 60 aus einem Lagerfach 20 zu der Übergabestation 55 zu bewegen. Bei der Ausführung dieses Einzelauftrags wird elektrische Energie erzeugt. Ferner übermittelt die Steuereinheit 82 an eine andere der Regalgassen 5 einen zusätzlichen Einzelauftrag, ein Ladegut 60 von einem unteren Lagerfach 20 in ein oberes Lagerfach 20 zu bewegen. Bei der Ausführung dieses Einzelauftrags wird elektrische Energie verwendet.

Beispielsweise übermittelt das Auftragssystem 81 an die Steuereinheit 82 einen Logistikauftrag, ein Ladegut 60 einzulagern. Daraufhin übermittelt die Steuereinheit 82 an eine der Regalgassen 5 einen Einzelauftrag, das Ladegut 60 von der Übergabestation 55 zu einem Lagerfach 20 zu bewegen. Bei der Ausführung dieses Einzelauftrags wird elektrische Energie benötigt. Ferner übermittelt die Steuereinheit 82 an eine andere der Regalgassen 5 einen zusätzlichen Einzelauftrag, ein Ladegut 60 von einem oberen Lagerfach 20 in ein unteres Lagerfach 20 zu bewegen. Bei der Ausführung dieses Einzelauftrags wird elektrische Energie erzeugt.

### Bezugszeichenliste

- 2: Lagersystem
- 5: Regalgasse
- 10: Lagerregal
- 11: erste Ebene
- 12: zweite Ebene
- 13: dritte Ebene
- 14: vierte Ebene
- 20: Lagerfach
- 40: Hubvorrichtung
- 45: Aufnahmevorrichtung
- 50: Fahrzeug
- 55: Übergabestation
- 60: Ladegut
- 70: Boden
- 81: Auftragssystem
- 82: Steuereinheit
- X: Längsrichtung
- Z: Vertikalrichtung

## Patentansprüche

1. Verfahren zum Betreiben eines Lagersystems (2), umfassend
eine Mehrzahl von Regalgassen (5), welche jeweils
ein Lagerregal (10) und ein Fahrzeug (50), welches entlang des Lagerregals (10) in einer Längsrichtung (X) bewegbar ist, umfassen, wobei
die Fahrzeuge (50) jeweils eine Hubvorrichtung (40) aufweisen, welche jeweils eine Aufnahmevorrichtung (45) zur Aufnahme eines Ladeguts (60) umfasst, die in eine Vertikalrichtung (Z) bewegbar ist,
wobei elektrische Energie, die im Betrieb von einem der Fahrzeuge (50) in einer der Regalgassen (5) erzeugt wird,
einer anderen Regalgasse (5) zugeleitet wird, und **dadurch gekennzeichnet, dass**
jede der Regalgassen (5) jeweils einen Zwischenkreiskondensator aufweist, und dass elektrische Energie, die im Betrieb von einem der Fahrzeuge (50) in einer der Regalgassen (5) erzeugt wird,
in dem Zwischenkreiskondensator einer anderen Regalgasse (5) gespeichert wird.

2. Verfahren nach Anspruch 1, **dadurch gekennzeichnet, dass**
die Zwischenkreiskondensatoren der Regalgassen (5) elektrisch miteinander verbunden sind.

3. Verfahren nach einem der vorangegangenen Ansprüche, **dadurch gekennzeichnet, dass** jede der Regalgassen (5) jeweils eine aufladbare Batterie aufweist, und dass elektrische Energie, die im Betrieb von einem der Fahrzeuge (50) in einer der Regalgassen (5) erzeugt wird,
in der Batterie einer anderen Regalgasse (5) gespeichert wird.

4. Verfahren nach Anspruch 4, **dadurch gekennzeichnet, dass**
die Batterien der Regalgassen (5) elektrisch miteinander verbunden sind.

5. Verfahren nach einem der vorangegangenen Ansprüche, **dadurch gekennzeichnet, dass** elektrische Energie, die im Betrieb von einem der Fahrzeuge (50) in einer der Regalgassen (5) erzeugt wird,
zum Antrieb eines Fahrzeugs (50) in einer anderen Regalgasse (5) in die Längsrichtung (X) verwendet wird.

6. Verfahren nach einem der vorangegangenen Ansprüche, **dadurch gekennzeichnet, dass** elektrische Energie, die im Betrieb von einem der Fahrzeuge (50) in einer der Regalgassen (5) erzeugt wird,
zum Antrieb der Aufnahmevorrichtung (45) der Hubvorrichtung (40) eines Fahrzeugs (50) in einer anderen Regalgasse (5) in die Vertikalrichtung (Z) verwendet wird.

7. Verfahren nach einem der vorangegangenen Ansprüche, **dadurch gekennzeichnet, dass** elektrische Energie, die im Betrieb von einem der Fahrzeuge (50) in einer der Regalgassen (5) erzeugt wird,
in einer anderen Regalgasse (5) verwendet wird, um ein Ladegut (60) von einem unteren Lagerfach (20) in ein oberes Lagerfach (20) zu bewegen, wobei
das obere Lagerfach (20) in Vertikalrichtung (Z) von einem Boden (70) weiter entfernt ist als das untere Lagerfach (20).

8. Verfahren nach einem der vorangegangenen Ansprüche, **dadurch gekennzeichnet, dass** elektrische Energie, die zum Betrieb von einem der Fahrzeuge (50) in einer der Regalgassen (5) benötigt wird, in einer anderen Regalgasse (5) erzeugt wird,
indem in der anderen Regalgasse (5) ein Ladegut von einem oberen Lagerfach (20) in ein unteres Lagerfach (20) bewegt wird, wobei
das obere Lagerfach (20) in Vertikalrichtung (Z) von einem Boden weiter entfernt ist als das untere Lagerfach (20).

9. Lagersystem (2), umfassend
eine Mehrzahl von Regalgassen (5), welche jeweils
ein Lagerregal (10) und ein Fahrzeug (50), welches entlang des Lagerregals (10) in einer Längsrichtung (X) bewegbar ist, umfassen, wobei
die Fahrzeuge (50) jeweils eine Hubvorrichtung (40) aufweisen, welche jeweils eine Aufnahmevorrichtung (45) zur Aufnahme eines Ladeguts (60) umfasst, die in eine Vertikalrichtung (Z) bewegbar ist,
**dadurch gekennzeichnet, dass** jede der Regalgassen (5) jeweils einen Zwischenkreiskondensator aufweist, und dass elektrische Energie, die im Betrieb von einem der Fahrzeuge (50) in einer der Regalgassen (5) erzeugt wird, in dem Zwischenkreiskondensator einer anderen Regalgasse (5) gespeichert wird, und dass
das Lagersystem (2) mit dem Verfahren nach einem der vorangegangenen Ansprüche betreibbar ist.

10. Lagersystem (2), nach Anspruch 9, **dadurch gekennzeichnet, dass**
das Lagersystem (2) ein Auftragssystem (81) zur Übermittlung von Logistikaufträgen an eine Steuereinheit (82) und
eine Steuereinheit (82) zur Koordinierung von erhaltenen Logistikaufträgen und zur Übermittlung von Einzelaufträgen an die einzelnen Regalgassen (5) umfasst.

## Claims

1. A method of operating a storage system (2) comprising a plurality of rack aisles (5) which each comprise a storage rack (10) and a vehicle (50) which is movable along the storage rack (10) in a longitudinal direction (X), wherein the vehicles (50) each have a lifting device (40) which in each case comprises a receiving device (45), for receiving a load (60), movable in a vertical direction (Z), wherein electrical energy, which is generated during operation by one of the vehicles (50) in one of the rack aisles (5), is supplied to another rack aisle (5), and **characterised in that** each of the rack aisles (5) has a respective intermediate circuit capacitor, and **in that** electrical energy, which is generated during operation by one of the vehicles (50) in one of the rack aisles (5), is stored in the intermediate circuit capacitor of another rack aisle (5).

2. A method according to claim 1, **characterised in that** the intermediate circuit capacitors of the rack aisles (5) are connected to one another electrically.

3. A method according to any one of the preceding claims, **characterised in that** each of the rack aisles (5) has a respective rechargeable battery, and **in that** electrical energy, which is generated during operation by one of the vehicles (50) in one of the rack aisles (5), is stored in the battery of another rack aisle (5).

4. A method according to claim 4, **characterised in that** the batteries of the rack aisles (5) are connected to one another electrically.

5. A method according to any one of the preceding claims, **characterised in that** electrical energy, which is generated during operation by one of the vehicles (50) in one of the rack aisles (5), is used to drive a vehicle (50) in another rack aisle (5) in the longitudinal direction (X).

6. A method according to any one of the preceding claims, **characterised in that** electrical energy, which is generated during operation by one of the vehicles (50) in one of the rack aisles (5), is used to drive the receiving device (45) of the lifting device (40) of a vehicle (50) in another rack aisle (5) in the vertical direction (Z).

7. A method according to any one of the preceding claims, **characterised in that** electrical energy, which is generated during operation by one of the vehicles (50) in one of the rack aisles (5), is used in another rack aisle (5) to move a load (60) from a lower storage compartment (20) into an upper storage compartment (20), wherein the upper storage compartment (20) is further away from a floor (70) in a vertical direction (Z) than the lower storage compartment (20).

8. A method according to any one of the preceding claims, **characterised in that** electrical energy, which is required for operation of one of the vehicles (50) in one of the rack aisles (5), is generated in another rack aisle (5) by moving a load in the other rack aisle (5) from an upper storage compartment (20) into a lower storage compartment (20), wherein the upper storage compartment (20) is further away from a floor in a vertical direction (Z) than the lower storage compartment (20).

9. A storage system (2) comprising a plurality of rack aisles (5) which each comprise a storage rack (10) and a vehicle (50) which is movable along the storage rack (10) in a longitudinal direction (X), wherein the vehicles (50) each have a lifting device (40) which in each case comprises a receiving device (45), for receiving a load (60), movable in a vertical direction (Z), **characterised in that** each of the rack aisles (5) has a respective intermediate circuit capacitor, and **in that** electrical energy, which is generated during operation by one of the vehicles (50) in one of the rack aisles (5), is stored in the intermediate circuit capacitor of another rack aisle (5), and **in that** the storage system (2) is operable using the method according to any one of the preceding claims.

10. A storage system (2) according to claim 9, **characterised in that** the storage system (2) comprises an order system (81) for transmitting logistics orders to a control unit (82) and a control unit (82) for coordinating obtained logistics orders and for transmitting individual orders to the individual rack aisles (5).

## Revendications

1. Procédé pour exploiter un système de stockage (2), comprenant une pluralité d'allées de rayonnage (5), lesquelles comprennent chacune un rayonnage de stockage (10) et un véhicule (50), lequel est déplaçable le long du rayonnage de stockage (10) dans une direction longitudinale (X), où les véhicules (50) comportent chacun un dispositif de levage (40), lequel comprend à chaque fois un dispositif de prise (45) pour recevoir une charge (60), qui est déplaçable dans une direction verticale (Z), où l'énergie électrique, qui est générée en fonctionnement par l'un des véhicules (50) dans l'une des allées de rayonnage (5), est acheminée vers une autre allée de rayonnage (5), et **caractérisé en ce que** chacune des allées de rayonnage (5) comporte à chaque fois un condensateur de circuit intermédiaire, et que l'énergie électrique, qui est générée en fonctionnement par l'un des véhicules (50) dans l'une des allées de rayonnage (5), est stockée dans le condensateur de circuit intermédiaire d'une autre allée de rayonnage (5).

2. Procédé selon la revendication 1, **caractérisé en ce que** les condensateurs de circuit intermédiaire des allées de rayonnage (5) sont électriquement reliés entre eux.

3. Procédé selon l'une des revendications précédentes, **caractérisé en ce que** chacune des allées de rayonnage (5) comporte à chaque fois une batterie rechargeable, et que l'énergie électrique, qui est générée en fonctionnement par l'un des véhicules (50) dans l'une des allées de rayonnage (5), est stockée dans la batterie d'une autre allée de rayonnage (5).

4. Procédé selon la revendication 4, **caractérisé en ce que** les batteries des allées de rayonnage (5) sont électriquement reliées entre elles.

5. Procédé selon l'une des revendications précédentes, **caractérisé en ce que** l'énergie électrique, qui est générée en fonctionnement par l'un des véhicules (50) dans l'une des allées de rayonnage (5), est utilisée pour l'entraînement d'un véhicule (50) dans une autre allée de rayonnage (5) dans la direction longitudinale (X).

6. Procédé selon l'une des revendications précédentes, **caractérisé en ce que** l'énergie électrique, qui est générée en fonctionnement par l'un des véhicules (50) dans l'une des allées de rayonnage (5), est utilisée pour l'entraînement du dispositif de prise (45) du dispositif de levage (40) d'un véhicule (50) dans une autre allée de rayonnage (5) dans la direction verticale (Z).

7. Procédé selon l'une des revendications précédentes, **caractérisé en ce que** l'énergie électrique, qui est générée en fonctionnement par l'un des véhicules (50) dans l'une des allées de rayonnage (5), est utilisée dans une autre allée de rayonnage (5) pour déplacer une charge (60) d'un compartiment de stockage inférieur (20) vers un compartiment de stockage supérieur (20), où le compartiment de stockage supérieur (20) est plus éloigné d'un sol (70) dans la direction verticale (Z) que le compartiment de stockage inférieur (20).

8. Procédé selon l'une des revendications précédentes, **caractérisé en ce que** l'énergie électrique, qui est nécessaire au fonctionnement de l'un des véhicules (50) dans l'une des allées de rayonnage (5), est générée dans une autre allée de rayonnage (5), en déplaçant dans l'autre allée de rayonnage (5) une charge d'un compartiment de stockage supérieur (20) vers un compartiment de stockage inférieur (20), où le compartiment de stockage supérieur (20) est plus éloigné d'un sol dans la direction verticale (Z) que le compartiment de stockage inférieur (20).

9. Système de stockage (2), comprenant une pluralité d'allées de rayonnage (5), lesquelles comprennent chacune un rayonnage de stockage (10) et un véhicule (50), lequel est déplaçable le long du rayonnage de stockage (10) dans une direction longitudinale (X), où les véhicules (50) comportent chacun un dispositif de levage (40), lequel comprend à chaque fois un dispositif de prise (45) pour recevoir une charge (60), qui est déplaçable dans une direction verticale (Z), **caractérisé en ce que** chacune des allées de rayonnage (5) comporte à chaque fois un condensateur de circuit intermédiaire, et que l'énergie électrique, qui est générée en fonctionnement par l'un des véhicules (50) dans l'une des allées de rayonnage (5), est stockée dans le condensateur de circuit intermédiaire d'une autre allée de rayonnage (5), et que le système de stockage (2) peut être exploité avec le procédé selon l'une des revendications précédentes.

10. Système de stockage (2), selon la revendication 9, **caractérisé en ce que** le système de stockage (2) comprend un système de commande (81) pour transmettre des ordres logistiques à une unité de commande (82) et une unité de commande (82) pour coordonner les ordres logistiques reçus et pour transmettre des ordres individuels aux différentes allées de rayonnage (5).
